**Europäisches Patentamt**

**European Patent Office**

**Office européen des brevets**

(11) Veröffentlichungsnummer: **0 149 493**
**B1**

(12) **EUROPÄISCHE PATENTSCHRIFT**

(45) Veröffentlichungstag der Patentschrift:
**08.04.87**

(21) Anmeldenummer: **85100440.8**

(22) Anmeldetag: **17.01.85**

(51) Int. Cl.⁴: **B 60 T 15/16,** B 60 T 13/40, B 60 T 15/38

(54) Führerbremsventil für Schienenfahrzeuge.

(30) Priorität: **17.01.84 DE 3401454**

(43) Veröffentlichungstag der Anmeldung:
**24.07.85 Patentblatt 85/30**

(45) Bekanntmachung des Hinweises auf die Patenterteilung:
**08.04.87 Patentblatt 87/15**

(84) Benannte Vertragsstaaten:
**DE FR SE**

(56) Entgegenhaltungen:
**FR-A-1 515 434**
**US-A-3 588 184**

(73) Patentinhaber: **KNORR- BREMSE AG, Moosacher Strasse 80 Postfach 401060, D-8000 München 40 (DE)**

(72) Erfinder: **Huber, Erich, Marschallstrasse 9, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**0 149 493**

**Beschreibung**

Die Erfindung betrifft ein Führerbremsventil für Schienenfahrzeuge, mit einer oder mehreren Bedienungsstellen, welche nicht druckerhaltende, willkürlich betätigbare Vorsteuerventile aufweisen, die dem Steuern eines in einer Steuerverbindung zu einem den Druck in einer Hauptluftleitung überwachenden Relaisventil herrschenden Vorsteuerdruckes dienen und mit einem auf einen Solldruck eingestellten Druckregler, dessen Solldruck einem mit der Steuerverbindung in Verbindung stehenden Stufenventil zugeführt wird, wobei das Stufenventil ein vom ungedrosselten Vorsteuerdruck und einer Zusatzkraft entgegen dem Solldruck beaufschlagtes Kolbenglied aufweist, welches bei überwiegender Solldruckbeaufschlagung ein eine zum Einsteuern einer ersten Bremsstufe ausreichende Absenkung des Vorsteuerdruckes überwachendes, erstes Ventil öffnet- und ein in eine Verbindung von einem mit dem Solldruck beaufschlagten Raum zu einem Vorsteuerdruck führenden Raum eingeordnetes, zweites Ventil schließt.

Ein derartiges Führerbremsventil ist aus der DE-C 24 54 368 bekannt. Das Stufenventil ist hierbei parallel zu einem das Volumen der Steuerverbindung vergrößernden Luftbehälter an eine Zweigleitung der Steuerverbindung angeschlossen und weist insgesamt drei Ventile auf, wovon zwei Ventile zu einem Doppelventil zusammengefaßt sein können; die drei Ventile sind hubabhängig nacheinander vom Kolbenglied zu betätigen. Die Druckabsenkungsgröße der ersten Bremsstufe wird hierbei vom Schalthub der Ventile und der Kraft einer das Kolbenglied belastenden Feder bestimmt; hieraus ergibt sich, daß sowohl die Schalthübe für die Ventile wie die Kennwerte der Feder engen Toleranzen unterliegen müssen. Das bekannte Stufenventil ist mit der Eigenheit behaftet, daß zu Ende eines Bremslösevorganges sich vorübergehend eine Entlüftung von der Steuerverbindung zur Atmosphäre öffnet, durch welche sich der in dieser Lösephase auf Solldruckhöhe zu bringende Vorsteuerdruck in die Atmosphäre entlüfet; die letzte Anstiegsphase des Vorsteuerdruckes wird hierdurch behindert, bei langsamem Einregeln des vollen Lösens kann diese Entlüftung das Erreichen des vollen Lösezustandes verhindern. Eine weitere Eigenheit des bekannten Führerbremsventils ist darin zu sehen, daß zum Ansprechen des Stufenventils der auch im das Volumen der Steuerverbindung vergrößernden Luftbehälter herrschende Vorsteuerdruck um einen bestimmten Druckwert abgesenkt werden muß, infolge des Luftbehälters über die Steuerventile also eine beachtliche Luftmenge abgelassen werden muß; diese beachtliche Luftmenge bedingt, daß zum Einsteuern der ersten Bremsstufe die Vorsteuerventile für eine bestimmte Mindestzeit in Bremsstellung gehalten werden müssen.

Bei einer gattungsfremden Führerbremsventileinrichtung nach der DE-A- 25 52 489 ist vorgesehen, zum Erreichen einer Vorsteuerdruck-Druckabsenkung mittels eines Magnetventils an eine Steuerverbindung eine als Luftbehälter ausgebildete Einschußkammer anzuschließen. Das Magnetventil ist dabei als Doppelventil ausgebildet, dessen eines Ventilteil den Anschluß der Einschußkammer an die Steuerverbindung und dessen anderes, entgegensetzt schaltendes Ventilteil eine Entlüftung der Einschußkammer überwacht. Beim Öffnen des ersterwähnten Ventilteiles zu Bremsbeginn strömt Druckluft aus der Steuerverbindung in die bis dahin entlüftete Einschußkammer ein, wodurch in der Steuerverbindung eine zum Einsteuern der ersten Bremsstufe ausreichende Druckabsenkung erreicht wird.

Aus der DE-C- 24 54 350 ist eine weitere, gattungsfremde Führerbremsventileinrichtung mit einem Stufenventil bekannt, wobei das Stufenventil jedoch mehrerer Leitungsverbindungen zu dem einzigen, vorgesehenen Vorsteuerventil bedarf. Ein Anschluß mehrerer Vorsteuerventile an das Stufenventil ist nicht ohne weiteres möglich, in der Praxis ist für jedes Vorsteuerventil ein gesondertes Stufenventil räumlich nahe dem Vorsteuerventil anzuordnen, wodurch sich ein hoher Bauaufwand, verbunden mit einem großen, benötigten Einbauraum an den Bedienungsstellen, ergibt.

Der Erfindung liegt die Aufgabe zugrunde, ein Führerbremsventil der eingangs genannten Art derart auszugestalten, daß die vorstehend erwähnten Eigenheiten bekannter Führerbremsventilanordnungen vermieden werden, daß also während Lösevorgängen das Stufenventil kein unerwünschtes Entlüften des Vorsteuerdruckes bewirkt, daß bereits ein sehr kurzzeitiges Betätigen einer Bedienungsstelle zu Bremsbeginn ein sicheres Einsteuern der ersten Bremsstufe bewirkt, und daß auch bei Vorhandensein mehrerer Bedienstellen nur ein Stufenventil vorgesehen werden muß; das an beliebiger, geeigneter Stelle, von der oder den Bedienstellen auch räumlich entfernt beispielsweise nahe des Relaisventils, angeordnet werden kann.

Diese Aufgabe wird nach der Erfindung dadurch gelöst, daß das erste Ventil eine Verbindung von einem Vorsteuerdruck führenden Raum zu einer bei geschlossenem, ersten Ventil an die Atmosphäre angeschlossenen Einschußkammer überwacht, daß in die Steuerverbindung stromauf von der Einmündung der das zweite Ventil aufweisenden Verbindung eine Drossel eingeordnet ist, und daß ein drittes Ventil vorgesehen ist, welches entgegengesetzt zum zweiten Ventil schaltet und welches in einen ungedrosselten Bypasskanal zur Drossel eingeordnet ist.

In den Unteransprüchen 2 bis 10 sind vorteilhafte Ausgestaltungsmöglichkeiten für ein nach den Merkmalen des Patentanspruches 1 ausgebildetes Führerbremsventil aufgezeigt, wobei besonders auf Anspruch 8 hinzuweisen ist, nach welchem mit geringem Zusatzaufwand eine funktionssichere Löse- und/oder Bremsanzeige vorgesehen werden kann. Die Ausbildung des Führerbremsventils nach Anspruch 10 gewährleistet, daß auch bei Vorhandensein eines das Volumen der Steuerverbindung vergrößernden Luftbehälters ein äußerst kurzzeitiges Betätigen eines Vorsteuerventils im Bremssinn, ausgehend vom Lösezustand, das sichere Einsteuern der ersten Bremsstufe bewirkt.

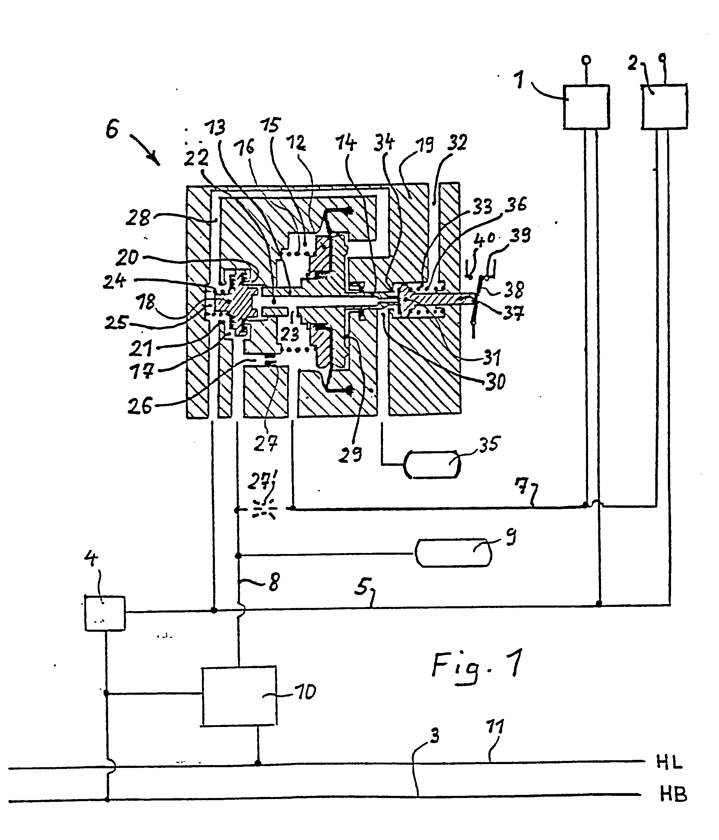

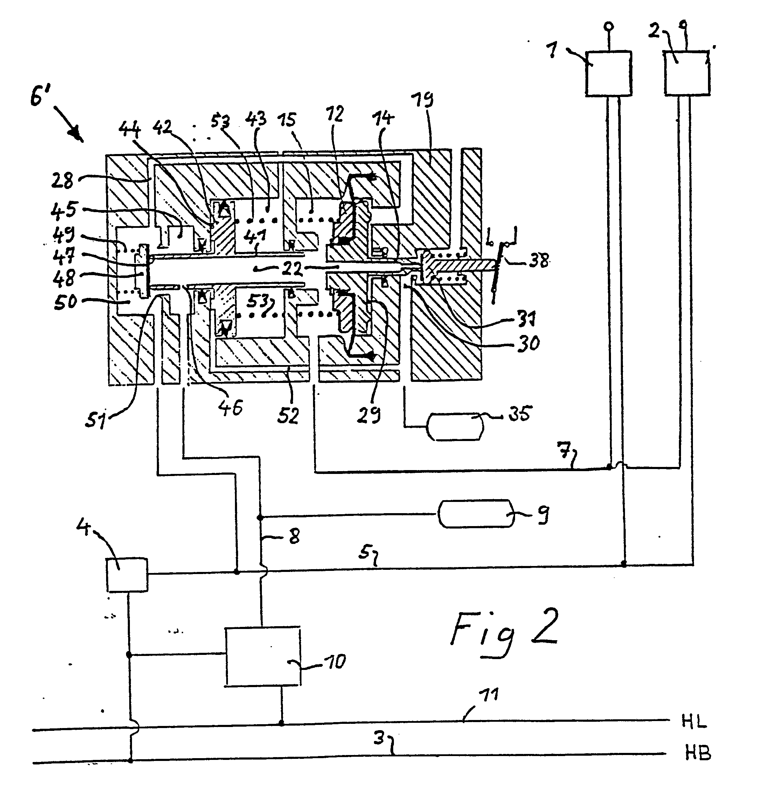

In den Zeichnungen Fig. 1 und Fig. 2 sind zwei unterschiedliche Ausführungsbeispiele für nach der Erfindung ausgebildete Führerbremsventile dargestellt, wobei gleiche Bauteile mit jeweils gleichen Bezugszahlen

2

**0 149 493**

versehen sind.

Nach Fig. 1 sind an zwei Bedienungsstellen zwei nicht druckerhaltende, willkürlich betätigbar ausgebildete Vorsteuerventile 1 und 2 vorgesehen, deren Aufbau bekannt ist und beispielsweise der Beschreibung der DE-PS 24 54 384 entsprechen kann. Die Druckluftversorgung der Vorsteuerventile 1 und 2 erfolgt aus einer Hauptbehälterleitung 3 über einen Druckregler 4, dessen einem Solldruck entsprechender Ausgangsdruck über Rohrleitungen 5 den Vorsteuerventilen 1 und 2 zugeführt wird. Ausgangsseitig sind die beiden Vorsteuerventile 1 und 2 an eine gemeinsame, durch ein Stufenventil 6 in zwei Abschnitte 7 und 8 aufgeteilte Steuerverbindung 7, 8 angeschlossen, so daß durch entsprechende Betätigung der Vorsteuerventile 1 und 2 in die Steuerverbindung 7, 8 ein Vorsteuerdruck einsteuerbar ist. Der den Vorsteuerventilen 1 und 2 abgewandte Abschnitt 8 der Steuerverbindung 7, 8 steht mit einem das Volumen der Steuerverbindung 7, 8 vergrößernden Luftbehälter 9 in Verbindung und mündet in einem Relaisventil 10 in eine nicht dargestellte Steuerkammer ein. Das Relaisventil 10 wird seinerseits aus der Hauptbehälterleitung 3 mit Druckluft versorgt und steuert den Druck in einer Hauptluftleitung 11 entsprechend dem ihm durch den Abschnitt 8 zugeführten Vorsteuerdruck.

Das Stufenventil 6 weist ein als Membrankolben ausgebildetes Kolbenglied 12 auf, das mit beidseitig auskragenden Ventilstößeln 13 und 14 versehen ist. In einen Beaufschlagungsraum 15 zur einen Seite des Kolbengliedes 12 mündet der vorsteuerventilseitige Abschnitt 7 der Steuerverbindung 7, 8 ein; in diesem Beaufschlagungsraum 15 befindet sich eine das Kolbenglied 12 belastende Feder 16. Der Ventilstößel 13 durchragt den Beaufschlagungsraum 15 und endet vor einem Raum 17 vor einer im Raum 17 befindlichen Ventilschließplatte 18, welche beidseitig mit Ventildichtringen versehen ist. Das Gehäuse 19 des Stufenventils 6 weist beidseitig der Ventilschließplatte 18 dieser zugewandte Ventilsitze 20 und 21 auf, zwischen welchen die Ventilschließplatte 18 beweglich ist und mit welchem die Ventilschließplatte 18 ein Doppelventil 18, 20, 21 bildet. Die beiden Ventilstößel 13 und 14 sind längs durchbohrt, ihr Innenraum 22 steht über eine Querbohrung 23 ständig mit dem Beaufschlagungsraum 15 in Verbindung. Das kolbengliedseitige Ventil 18, 20 des Doppelventils 18, 20, 21 überwacht eine großquerschnittige, durch den Innenraum 22 geführte Verbindung des Beaufschlagungsraumes 15 mit dem Raum 17; eine die Ventilschließplatte 18 belastende Feder 24 sucht das Ventil 18, 20 geschlossen zu halten. Das weitere Ventil 18, 21 des Doppelventils 18, 20, 21 überwacht eine Verbindung des Raumes 17 zu einem die Feder 24 aufnehmenden Raum 25. Der Raum 17 ist an den Abschnitt 8 der Steuerverbindung 7, 8 und der Raum 25 ist an die den Solldruck führende Rohrleitung 5 angeschlossen. In einem die Räume 15 und 17 miteinander verbindenden Kanal 26 befindet sich eine Drossel 27; das Ventil 18, 20 überwacht somit einen ungedrosselten Bypass zur Drossel 27. Vom Raum 25 führt ein Gehäusekanal 28 zum andersseitig des Kolbengliedes 12 befindlichen, von letzterem begrenzten Beaufschlagungsraum 29. Der Ventilstößel 14 durchragt abgedichtet verschieblich den Beaufschlagungsraum 29 und endet mit einem seine Mündung umgebenden Ventilsitz in einem Raum 30 vor einer Doppelventilplatte 31, welche sich ihrerseits in einem über einen Entlüftungskanal 32 ständig mit der Atmosphäre verbundenen Raum 33 befindet und welche mit dem Ventilstößel 14 und einem gehäusefesten Ventilsitz 34 ein Doppelventil 14, 31, 34 bildet, dessen eines Ventilteil 14, 31 eine Verbindung des Beaufschlagungsraumes 15 mit dem Raum 30 und dessen anderes Ventilteil 14, 34 eine Verbindung des Raumes 30 zur Atmosphäre überwacht. An den Raum 30 ist eine als Luftbehälter ausgebildete Einschußkammer 35 angeschlossen. Im Raum 33 befindet sich eine die Doppelventilplatte 31 in Schließrichtung des Ventilteiles 31, 34 belastende Feder 36.

Die Ventile 18, 20 und 18, 21 bzw. Ventilteile 14, 31 und 31, 34 beider Doppelventile 18, 20, 21 bzw. 14, 31, 34 sind vom Kolbenglied 12 jeweils zueinander entgegengesetzt schaltbar.

Die Doppelventilplatte 31 ist mit einem Stößel 37 versehen, mittels dessen eine als Wechselschalter ausgebildete, elektrische Schalteinrichtung 38 schaltbar ist; der eine Ausgangskontakt 39 ist dabei zum Betätigen einer nicht dargestellten Löseanzeige und der andere Ausgangskontakt 40 zum Betätigen einer ebenfalls nicht dargestellten Bremsanzeige vorgesehen.

Im betriebsbereiten Lösezustand des Führerbremsventils führt die Hauptbehälterleitung 3 Druckluft hohen Druckes, der auf den Solldruck reduziert vom Druckregler 3 in die Rohrleitung 5 eingespeist wird. Die Vorsteuerventile 1 und 2 befinden sich in ihrer Ruhestellung, in welcher sie den Abschnitt 7 der Steuerverbindung 7, 8 ihrerseits abgesperrt halten. Durch den Raum 25, das geöffnete Ventil 18, 21 und den Raum 17 gelangt der Solldruck aus der Rohrleitung 5 auch in den Abschnitt 8 der Steuerverbindung 7, 8 und zum Relaisventil 10, welches infolgedessen in die Hauptluftleitung 11 eine entsprechende Druckhöhe zum Gelösthalten der Bremsen einsteuert. Über die Drossel 27 wird die Solldruckhöhe auch im Beaufschlagungsraum 15 und dem Abschnitt 7 der Steuerverbindung 7, 8 aufrechterhalten. Im Beaufschlagungsraum 29 herrscht ebenfalls Solldruckhöhe; die Feder 16 hält das Kolbenglied 12 in seiner gemäß Fig. 1 rechten Endstellung, das Ventil 18, 20 ist unter der Kraft der Feder 24 geschlossen, das Ventilteil 14, 31 ist ebenfalls geschlossen und das Ventilteil 31, 34 ist geöffnet, so daß die Einschußkammer 35 mit dem Raum 30 durch den Entlüftungskanal 32 entlüftet sind. Der Stößel 37 hält die Schalteinrichtung 38 in Schließstellung für den Ausgangskontakt 39, so daß die Löseanzeige betätigt ist.

Zum Einbremsen ist durch Betätigen eines der Vorsteuerventile 1 oder 2 der Druck im Abschnitt 7 der Steuerverbindung 7, 8 abzusenken; die Drossel 27 schirmt diese auch im Beaufschlagungsraum 15 wirksame Druckabsenkung vom Raum 17 ab, so daß am Kolbenglied 12 eine Druckdifferenz auftritt, welche das Kolbenglied 12 entgegen der Kraft der Feder 16 nach links verschiebt. Dabei wird das Doppelventil 14, 31, 34 und nach Anlage des Ventilstößels 13 an der Ventilschließplatte 18 etwa gleichzeitig hierzu auch das Doppelventil 18, 20, 21 umgeschaltet, so daß das Ventil 18, 21 sowie das Ventilteil 31, 34 geschlossen und das Ventil 18, 20 sowie das Ventilteil 14, 31 geöffnet werden. Über das geöffnete Ventil 18, 20 wird die Drossel 27

3

über den Innenraum 22 großquerschnittig überbrückt und über das geöffnete Ventil 14, 31 wird die von der Atmosphäre abgetrennte Einschußkammer 35 an den Beaufschlagungsraum 15 und damit die nunmehr ungedrosselt miteinander verbundenen Abschnitte 7 und 8 der Steuerverbindung 7, 8 angeschlossen. Aus der Steuerverbindung 7, 8 strömt Druckluft in die Einschußkammer 35 bis zum Druckausgleich ein, wodurch in der Steuerverbindung 7, 8 und damit auch dem Luftbehälter 9 eine rasche Druckabsenkung bewirkt wird; das Volumen der Einschußkammer 35 ist zum Gesamtvolumen der Steuerverbindung 7, 8 und der mit dieser verbundenen Räume derart abgestimmt, daß diese Druckabsenkung zum Einsteuern der ersten Bremsstufe ausreicht. Über das Relaisventil 10 wird die Druckabsenkung in der Steuerverbindung 7, 8 auf die Hauptluftleitung 11 übertragen. Während des Umschaltvorganges des Doppelventils 14, 31, 34 wird vermittels des Stößels 37 auch die Schalteinrichtung 38 umgesteuert, so daß über den sich öffnenden Ausgangskontakt 39 die Löseanzeige erlischt und den sich schließenden Ausgangskontakt 40 die Bremsanzeige betätigt wird.

Die nachfolgenden Brems- und Lösevorgänge können durch entsprechende Betätigung der Vorsteuerventile 1 und 2 durch entsprechende Drucksteuerung des in der Steuerverbindung 7, 8 herrschenden Vorsteuerdruckes wie üblich gesteuert werden, wobei das Stufenventil 6 seine erreichte Schaltstellung beibehält.

Kurz vor Beendigen des Bremsvorganges, unmittelbar vor Erreichen des Lösezustandes, wird in die Steuerverbindung 7, 8 und damit den Beaufschlagungsraum 15 eine dicht unterhalb der Solldruckhöhe liegende Druckhöhe eingesteuert, welche ausreicht, in Verbindung mit der Kraft der Feder 16 das Kolbenglied 12 entgegen dem im Beaufschlagungsraum 29 ständig anstehenden Solldruck nach rechts in seine in Fig. 1 dargestellte Ausgangslage zurückzuschieben. Dabei wird am Doppelventil 18, 20, 21 das Ventil 18, 21 wieder geöffnet und das Ventil 18, 20 geschlossen, so daß die Solldruckhöhe führende Rohrleitung 5 mit dem Abschnitt 8 der Steuerverbindung 7, 8 und damit dem Relaisventil 10 verbunden wird, in letztere rasch Solldruckhöhe eingesteuert wird und das Relaisventil 10 demgemäß in die Hauptluftleitung 11 ebenfalls rasch die gelösten Bremsen entsprechende Druckhöhe einsteuert. Über die sich umschaltenden Ventilteile 14, 31 und 31, 34 des Doppelventils 14, 31, 34 wird die Einschußkammer 35 vom Innenraum 22 und damit dem Beaufschlagungsraum 15 abgetrennt und über den Entlüftungskanal 32 in die Atmosphäre entleert. Der Stößel 37 schaltet die Schalteinrichtung 38 zum Erlöschen der Brems- und Betätigen der Löseanzeige um. Durch weitere Betätigung der Vorsteuerventile 1 oder 2 und jedenfalls durch die Drossel 27 wird sodann im Beaufschlagungsraum 15 und dem Abschnitt 7 wieder der volle Solldruck aufgebaut. Damit ist der Lösevorgang beendet.

Aus Fig. 1 ist ersichtlich, daß das Kolbenglied 12 in seiner dargestellten Normallage am Gehäuse 19 abgefangen ist, durch die mechanische Trennung von Ventilstößel 13 und Ventilschließplatte 18 also eine mechanische Überbelastung des Ventils 18, 20 ausgeschlossen ist. Die Ventilteile des Doppelventils 14, 31, 34 sind nur durch die Kraft der Feder 36 belastbar und somit ebenfalls vor mechanischen Überlastungen geschützt. Das Ventil 18, 21 kann durch ein federndes, nicht dargestellte Zwischenglied zwischen der Ventilschließplatte 18 und dem Stößel 23 oder durch ein einfaches, ebenfalls nicht dargestelltes, unproblematisches Abfangen der Ventilschließplatte 18 gegen das Gehäuse 19 vor Überlastungen geschützt werden. In Abänderung zu diesen Ausführungen ist es jedoch auch möglich, die Ventilschließplatte 18 fest mit dem Ventilstößel 13 zu verbinden. In weiterer Abwandlung ist es möglich, bei Entfall des Kanals 26 und der Drossel 27 im Stufenventil 6 in der in Fig. gestrichelt eingezeichneten Weise die Abschnitte 7 und 8 mittels einer Drossel 27' miteinander zu verbinden; die Funktionsweise des Führerbremsventils wird hierdurch nicht geändert.

Falls das Volumen der Steuerverbindung 7, 8 sowie der mit diesen verbundenen Räume in Abstimmung auf die Durchströmungsquerschnitte der Vorsteuerventile 1 und 2 auch ohne Luftbehälter 9 ausreichend ist, um die erforderliche Feinfühligkeit der Drucksteuerung in der Steuerverbindung 7, 8 zu gewährleisten, weist das Führerbremsventil bei Entfall des Luftbehälters 9 durch die Einordnung der Drossel 27 zwischen die Abschnitte 7 und 8 der Steuerverbindung 7, 8 immer noch eine sehr hohe Ansprechempfindlichkeit für das Einsteuern der ersten Bremsstufe bei nur äußerst kurzzeitiger Betätigung eines der Vorsteuerventile 1 oder 2 auf, da durch diese nach wie vor nur die zum Ansprechen des Stufenventils 6 erforderliche Druckabsenkung in das Volumen des Abschnittes 7 der Steuerverbindung 7, 8 sowie den relativ kleinen Beaufschlagungsraum 15 eingesteuert werden muß, die Drossel 27 das Volumen des Abschnittes 8 mit der relativ großen Steuerkammer des Relaisventils 10 dagegen von dieser Druckabsenkung abschirmt; im Vergleich zu bekannten Führerbremsventilen muß also auch hierbei mittels der Vorsteuerventile 1 oder 2 nur eine sehr geringe Luftmenge aus dem Abschnitt 7 zur Atmosphäre abgelassen werden.

Beim Führerbremsventil nach Fig. 2 entspricht der Aufbau des Stufenventils 6' einschließlich des Beaufschlagungsraumes 15 und aller rechts von diesen befindlichen Teile demjenigen des Stufenventils 6 nach Fig. 1 und braucht daher nicht weiter beschrieben zu werden. Der Ventilstößel 13 und das Doppelventil 18, 20, 21 der Ausführung nach Fig. 1 sind durch die nachfolgend beschriebene Anordnung ersetzt:

Gemäß Fig. 2 mündet in den Beaufschlagungsraum 15 offen ein im Gehäuse 19 abgedichtet verschieblich gelagertes Ventilrohr 41 ein, welches etwa mittig einen Kolben 42 trägt, der eine an den Beaufschlagungsraum 15 anschließende, ständig mit der Atmosphäre in Verbindung stehende Kammer 43 von einem Beaufschlagungsraum 44 abtrennt. Andererseits durchragt das Ventilrohr 41 einen mit dem Abschnitt 8 der Steuerverbindung 7, 8 verbundenen Raum 45, in welchen es eine als Drossel 46 ausgebildete Querbohrung aufweist, und endet mit einem Ventilsitz 47 vor einer in einem Raum 50 befindlichen Doppelventilplatte 48, welche von einer Feder 49 belastet ist. Mit einem gehäusefesten Ventilsitz 51 bildet die Doppelventilplatte 48 neben dem Ventil 47, 48 ein weiteres, einem Doppelventil 47, 48, 51 zugehörendes Ventil 48, 51, welches eine Verbindung der beiden Räume 45 und 50 überwacht. Der Raum 50 ist ständig an die Rohrleitung 5 angeschlossen, weiterhin mündet in den Raum 50 der andererseits zum Beaufschlagungsraum 29 führende Gehäusekanal 28 ein. Ein weiterer Gehäusekanal 52 verbindet den Beaufschlagungsraum 44 mit dem Raum 30 bzw. der Einschußkammer 35. Im übrigen entspricht der Aufbau des Führerbremsventils nach Fig. 2 denjenigen nach Fig. 1, zum Verdeutlichen sind in Fig. 2 weitere, in ihrer Bedeutung zu Fig. 1 beschriebene Bezugszahlen eingetragen.

Das Doppelventil 18, 20, 21 sowie die Drossel 27 nach Fig. 1 sind bei der Ausführung nach Fig. 2 durch das Doppelventil 47, 48, 51 und die Drossel 46 ersetzt. Weiterhin ist die unmittelbare, mechanische Betätigung des Doppelventils 18, 20, 21 durch das Kolbenglied 12 beim Führerbremsventil nach Fig. 1 bei der Ausführung nach Fig. 2 durch eine mittelbare, pneumatische Betätigung ersetzt. Das Kolbenglied 12 betätigt unmittelbar nur noch das die Verbindungen der Einschußkammer 35 überwachende Doppelventil, während das Doppelventil 47, 48, 41 mittelbar pneumatisch vom Kolbenglied 12 durch die mit der Einschußkammer 35 gekoppelte Druckbeaufschlagung des Kolbens 42 vermittels des Beaufschlagungsraumes 44 betätigt wird. Sobald und solange die Einschußkammer 35 Druckluft führt, wird der Kolben 42 durch entsprechende Druckluftbeaufschlagung des Beaufschlagungsraumes 44 entgegen der Kraft einer im Raum 43 befindlichen, den Kolben 42 belastenden Feder 53 gemäß Fig. 2 nach rechts verschoben, wobei sich das Ventil 48, 51 zum Sperren der Verbindung der beiden Räume 50 und 45 schließt und das Ventil 47, 48 zum Überbrücken der Drossel 46 öffnet. Hieraus ist ableitbar, daß auch die Funktionsweise des Führerbremsventils nach Fig. 2 derjenigen des Führerbremsventils nach Fig. 1 entspricht. Das Kolbenglied 12 weist allerdings eine gesteigerte Ansprechempfindlichkeit auf, da es lediglich noch das die Druckbeaufschlagung der Einschußkammer 35 überwachende Doppelventil mechanisch schalten muß. Es ist allerdings sicherzustellen, daß während Bremsvorgängen der im Abschnitt 7 herrschende Druck vermittels der Vorsteuerventile 1 und 2 nicht wesentlich unter das einer Vollbremsung entsprechende Druckniveau abgesenkt wird, da andernfalls die Feder 53 ein Zurückschalten des Doppelventils 47, 48, 51 in seine gelösten Bremsen entsprechende Schaltstellung bewirken könnte. Durch nicht dargestellten Einbau eines in Strömungsrichtung zum Raum 30 öffnenden Rückschlagventils in den Innenraum 22 des Ventilrohres 14 kann diese Bedingung behoben werden, da dieses Rückschlagventil auch bei völliger Entleerung des Abschnittes 7 die Druckluftbeaufschlagung der Einschußkammer 35 und damit des Beaufschlagungsraumes 44 während Bremsvorgängen bis zu deren Beendigung aufrechterhält.

Die Feder 16 übt auf das Kolbenglied 12 eine Zusatzkraft aus; diese Zusatzkraft kann bei Entfall der Feder 16 auch durch eine Ausbildung des Kolbengliedes 12 als Differentialkolben ausgeübt werden, wobei die größere Kolbenfläche dem Beaufschlagungsraum 15 zuzuwenden ist.

In Abänderung zu den vorstehend beschriebenen Ausführungsbeispielen ist es auch möglich, beide Doppelventile 14, 31, 34 und 18, 20, 21 bzw. 47, 48, 51 zu einer Seite des Kolbengliedes 12 anzuordnen. Beim Ausführungsbeispiel nach Fig. 1 ist es unabhängig von oder in Verbindung mit dieser Abänderung möglich, das Doppelventil 18, 20, 21, bei welchem in der dargestellten Ausbildung während Umschaltvorgängen kurzzeitig zugleich beide Ventile 18, 20 und 18, 21 geöffnet sind, durch ein dem in Fig. 2 gezeigten Doppelventil 47, 48, 51 entsprechendes Doppelventil mit einem gehäusefesten und einem beweglichen Ventilsitz zu ersetzen, wobei während Umschaltvorgängen keine gleichzeitige Öffenstellung beider Ventile auftritt. Bei Kombination beider vorerwähnter Abänderungen für ein Stufenventil, in welchem das Kolbenglied beide Doppelventile unmittelbar betätigt, können sich zwei den Ventilstößeln 14 und 15 nach Fig. 1 entsprechende, in ihrem Innenraum vorsteuerdruckbeaufschlagte Ventilstößel zu einer Seite des Kolbengliedes 12 befinden, wobei zweckmäßig einer der Ventilstößel mechanisch mit dem Kolbenglied verbunden und der andere Ventilstößel mechanisch vom Kolbenglied getrennt ist; der andere Ventilstößel schließt dabei zweckmäßig an eine Durchbohrung in der Doppelventilplatte des dem Kolbenglied näheren Doppelventils an.

**Patentansprüche**

1. Führerbremsventil für Schienenfahrzeuge mit einer oder mehreren Bedienungsstellen, welche nicht druckerhaltende, willkürlich betätigbare Vorsteuerventile (1, 2) aufweisen, die dem Steuern eines in einer Steuerverbindung (7, 8) zu einem den Druck in einer Hauptluftleitung (11) überwachenden Relaisventil (10) herrschenden Vorsteuerdruckes dienen, und mit einem auf einem Solldruck eingestellten Druckregler (4), dessen Solldruck einem mit der Steuerverbindung (7, 8) in Verbindung stehenden Stufenventil (6, 6') zugeführt wird, wobei das Stufenventil (6, 6') ein vom ungedrosselten Vorsteuerdruck und einer Zusatzkraft (16) entgegen dem Solldruck beaufschlagtes Kolbenglied (12) aufweist, welches bei überwiegender Solldruckbeaufschlagung ein eine zum Einsteuern einer ersten Bremsstufe ausreichende Absenkung des Vorsteuerdruckes überwachendes, erstes Ventil (14, 31) öffnet und ein in eine Verbindung von einem mit dem Solldruck beaufschlagten Raum (25; 50) zu einem Vorsteuerdruck führenden Raum (17, 45) eingeordnetes, zweites Ventil (18, 21; 48, 51) schließt, dadurch gekennzeichnet, daß das erste Ventil (14, 31) eine Verbindung von einem Vorsteuerdruck führenden Raum (15) zu einer bei geschlossenem, ersten Ventil (14, 31) an die Atmosphäre angeschlossenen Einschußkammer (35) überwacht, daß in die Steuerverbindung (7, 8) stromauf von der Einmündung der das zweite Ventil (18, 21; 48, 51) aufweisenden Verbindung eine Drossel (27; 46) eingeordnet ist, und daß ein drittes Ventil (18, 20; 47, 48) vorgesehen ist, welches entgegengesetzt zum zweiten

5

Ventil (18, 21; 48, 51) schaltet und welches in einen ungedrosselten Bypasskanal zur Drossel (27; 46) eingeordnet ist.

2. Führerbremsventil nach Anspruch 1, dadurch gekennzeichnet, daß das erste Ventil als erstes Doppelventil (14, 31, 34) ausgebildet ist, dessen eines Ventilteil (14, 31) die Verbindung vom Vorsteuerdruck führenden Raum (15) zur Einschußkammer (35) und dessen zweites, entgegengesetzt zum ersten Ventilteil (14, 31) schaltendes Ventilteil (31, 34) eine Verbindung von der Einschußkammer (35) zur Atmosphäre überwacht.

3. Führerbremsventil nach Anspruch 1 oder 2, dadurch gekennzeichnet, daß das zweite und das dritte Ventil (18, 21 und 18, 20; 48, 51 und 47, 48) zu einem zweiten Doppelventil (18, 20, 21; 47, 48, 61) zusammengefaßt sind.

4. Führerbtemsventil nach Anspruch 3, dadurch gekennzeichnet, daß das zweite Doppelventil (18, 20, 21) eine vom Kolbenglied (12) bewegbare Ventilschließplatte (18) aufweist. welche zwischen zwei ihr beiderseits gegenüberstehenden, gehäusefesten Ventilsitzen (20, 21) beweglich ist.

5. Führerbremsventil nach Anspruch 3 oder 4, dadurch gekennzeichnet, daß das zweite Doppelventil (47, 48, 51) über eine pneumatische Koppelung mittelbar vom Kolbenglied (12) betätigbar ist.

6. Führerbremsventil nach Anspruch 5, dadurch gekennzeichnet, daß das zweite Doppelventil (47, 48, 51) von einem in Öffnungsrichtung des dritten Ventils (47, 48) vom Druck in der Einschußkammer (35) entgegen einer ständig wirksamen Kraft (53) beaufschlagten Kolben (42) betätigbar ist.

7. Führerbremsventil nach Anspruch 2 oder 3, dadurch gekennzeichnet, daß dem ersten und/oder dem zweiten Doppelventil (14, 31, 34; 18, 20, 21; 47, 48, 51) jeweils ein hohler Ventilstößel (13; 14; 41) zugehört, dessen Innenraum (22) ungedrosselt vom Vorsteuerdruck beaufschlagt ist.

8. Führerbremsventil nach einem oder mehreren der vorstehenden Ansprüche, dadurch gekennzeichnet, daß eine vom Kolbenglied (12) mittel- oder unmittelbar schaltbare, elektrische Schalteinrichtung (38) zum Schalten einer Löse- und/oder Bremsanzeige vorgesehen ist.

9. Führerbremsventil nach Anspruch 8, dadurch gekennzeichnet, daß die elektrische Schalteinrichtung (38) von einem Stößel (37) schaltbar ist, der mit einer dem ersten Doppelventil (14, 31, 34) zugeordneten Doppelventilplatte (31) verbunden ist.

10. Führerbremsventil nach einem oder mehreren der vorstehenden Ansprüche, mit einem das Volumen der vom Vorsteuerdruck beaufschlagten Räume vergrößernden, gegebenenfalls an die Steuerverbindung (7, 8) angeschlossenen Luftbehälter (9), dadurch gekennzeichnet, daß der Luftbehälter (9) an einem stromab der Drossel (27; 46) befindlichen, vom Vorsteuerdruck beaufschlagten Raum bzw. Abschnitt (8) der Steuerverbindung (7, 8) angeschlossen ist.

11. Führerbremsventil nach den Ansprüchen 2 und 3, dadurch gekennzeichnet, daß die beiden Doppelventile zu einer Seite des Kolbengliedes angeordnet sind, wobei beiden Doppelventilen voneinander getrennte Ventilstößel zugeordnet sind, deren Innenräume vorsteuerdruckbeaufschlagt sind und deren einer Ventilstößel unmittelbar vom Kolbenglied bewegbar und deren anderer Ventilstößel vom Kolbenglied mechanisch getrennt ist und an eine Durchbohrung einer Doppelventilplatte des dem Kolbenglied näheren Ventils anschließt.

## Claims

1. Driver's brake valve for railway vehicles, comprising one or more operating points having non-pressure-maintaining, arbitrarily operable precontrol valves (1, 2) which serve to control a precontrol pressure prevailing in a control connection (7, 8) with a relay valve (10) which monitors the pressure in a main air brake pipe (11), and comprising a pressure regulator (4) which is set to a desired pressure that is delivered to a graduating valve (6, 6') which communicates with the control connection (7, 8), the said graduating valve (6, 6') having a piston member (12) which is charged by the unrestricted precontrol pressure and an auxiliary force (16) against the desired pressure, which piston member (12) opens, when charged predominantly by the desired pressure, a first valve (14, 31) serving to monitor a precontrol pressure drop sufficient to initiate a first braking step, and which piston member closes a second valve (18, 21; 48, 51) inserted in a connection from a chamber (25; 50) charged by the desired pressure to a chamber (17, 45) at precontrol pressure, wherein the first valve (14, 31) monitors a connection from a chamber (15) at precontrol pressure to an inshot chamber (35) which is connected to atmosphere when the first valve (14, 31) is closed, wherein a choke (27; 46) is incorporated in the control connection (7, 8) upstream of the mouth of the connection containing the second valve (18, 21; 48, 51), and wherein a third valve (18, 20; 47, 48) is provided, which is actuated in the opposite sense to the second valve (18, 21; 48, 51) and which is incorporated in an unrestricted bypass duct to the choke (27; 46).

2. Driver's brake valve as defined in Claim 1, wherein the first valve is designed as a first double-seat valve (14, 31, 34), of which one part (14, 31) monitors the connection from the chamber (15) at precontrol pressure to the inshot chamber (35), while the second part (31, 34), which is actuated in the opposite sense to the first valve part (14, 31), monitors a connection from the inshot chamber (35) to atmosphere.

3. Driver's brake valve as defined in Claim 1 or 2, wherein the second and third valves (18, 21 and 18, 20; 48, 51 and 47, 48) are combined to form a second double-seat valve (18, 20, 21; 47, 48, 51).

4. Driver's brake valve as defined in Claim 3, wherein the second double-seat valve (18, 20, 21) has a valve closing plate (18) which can be moved by the piston member (12) between two fixed valve seats (20, 21) that are opposite the plate at both sides.

5. Driver's brake valve as defined in Claim 3 or 4, wherein the second double-seat valve (47, 48, 51) can be actuated indirectly by the piston member (12) via a pneumatic clutch.

6. Driver's brake valve as defined in Claim 5, wherein the second double-seat valve (47, 48, 51) can be actuated by a piston (42) which is charged by the pressure in the inshot chamber (35) in the opening direction of the third valve (47, 48) against a constantly acting force (53).

7. Driver's brake valve as defined in Claim 2 or 3, wherein the first and/or the second double-seat valve (14, 31, 34; 18, 20, 21; 47, 48, 51) has/have a hollow valve tappet each (13; 14; 41), whose inner chamber (22) is charged by the precontrol pressure without any restriction.

8. Driver's brake valve as defined in one or more of the preceding Claims, wherein an electric switching device (38), which can be actuated directly or indirectly by the piston member (12), is provided for operating a release and/or a braking indicator.

9. Driver's brake valve as defined in Claim 8, wherein the electric switching device (38) can be actuated by a tappet (37) which is connected to a double-seat valve plate (31) that is allocated to the first double-seat valve (14, 31, 34).

10. Driver's brake valve as defined in one or more of the preceding Claims, comprising an air reservoir (9) which enlarges the volume of the chambers charged by the precontrol pressure and which may be connected to the control connection (7, 8), wherein the air reservoir (9) is connected to a chamber or section (8) of the control connection (7, 8) that is downstream of the choke (27; 46) and that is charged by the precontrol pressure.

11. Driver's brake valve as defined in Claims 2 and 3, wherein the two double-seat valves are located at one side of the piston member, and are allocated independent valve tappets whose inner chambers are charged by precontrol pressure, one valve tappet being movable directly by the piston member while the other valve tappet is mechanically separate from the piston member and adjoins a hole through a double-seat valve plate in the valve closer to the piston member.

## Revendications

1. Robinet de frein du mécanicien pour des véhicules sur rails avec un ou plusieurs postes de commande qui comportent des distributeurs de pré-commande (1, 2), ne possédant pas de pression, susceptible d'être commandés à volonté et servant à contrôler une pression de pré-commande qui règne dans une liaison de commande (7, 8) menant à une soupape de relais (10) qui contrôle la pression dans une conduite principale (11) et avec un régulateur de pression (4) réglé à une pression de consigne qui est appliquée à une soupape à paliers (6, 6') qui est reliée à la liaison de commande (7, 8), ladite soupape à paliers (6, 6') comportant un élément de piston (12) chargé, à l'encontre de la pression de consigne, par la pleine pression de pré-commande et par une force supplémentaire (16), lequel élément de piston, lorsque la charge en pression de consigne est prépondérante, ouvre une première soupape (14, 31) qui contrôle la chute de la pression de pré-commande qui est suffisante pour régler un premier palier de freinage et ferme une seconde soupape (16, 21; 48, 51) disposée dans une liaison menant d'une chambre (25; 50) chargée avec la pression de consigne à une chambre (17, 45) dans laquelle règne la pression de pré-commande, caractérisé par le fait que la première soupape (14, 31) contrôle une liaison menant d'une chambre (15) dans laquelle règne la pression de pré-commande à une chambre d'injection (35) qui est reliée à l'atmosphère lorsque ladite première soupape (14, 31) est fermée, qu'un dispositif d'étranglement (27; 46) est monté dans la liaison de commande (7, 8), en amont de l'embouchure de la liaison qui comporte la seconde soupape (18, 21; 48, 51) et qu'il est prévu une troisième soupape (18, 20; 47, 48) qui commute en sens inverse de la seconde soupape (18, 21; 48, 51) et qui est montée dans un canal de by-pass non étranglé, monté sur le dispositif d'étranglement (27; 46).

2. Robinet de frein du mécanicien selon la revendication 1, caractérisé par le fait que la première soupape est réalisée sous la forme d'une première soupape double (14, 31, 34) dont un élément de soupape (14, 31) contrôle la liaison menant de la chambre (15) dans laquelle règne la pression de pré-commande à la chambre d'injection (35) et dont le second élément de soupape (31, 34) qui commute en sens opposé du premier élément de soupape (14, 31), contrôle une liaison menant de la chambre d'injection (35) à l'atmosphère.

3. Robinet de frein du mécanicien selon la revendication 1 ou 2, caractérisé par le fait que la seconde et la troisième soupape (18, 21 et 18, 20; 48, 51 et 47, 48) sont rassemblées en une seconde soupape double (18, 20, 21; 47, 48, 51).

4. Robinet de frein du mécanicien selon la revendication 3, caractérisé par le fait que la seconde soupape double (18, 20, 21) comporte un plateau de fermeture de soupape (18) déplaçable par l'élément de piston (12), et mobile entre deux sièges de soupape (20, 21) solidaires du boîtier, et situés de part et d'autre dudit plateau.

5. Robinet de frein du mécanicien selon la revendication 3 ou 4, caractérisé par le fait que la seconde soupape double (47, 48, 51) est susceptible d'être commandée indirectement par l'élément de piston (12), par l'intermédiaire d'un couplage pneumatique.

6. Robinet de frein du mécanicien selon la revendication 5, caractérisé par le fait que la seconde soupape double (47, 48, 51) est susceptible d'être commandée par un piston (42) chargé, à l'encontre d'une force (53) agissant en permanence, dans le sens de l'ouverture de la troisième soupape (47, 48), par la pression qui règne dans la chambre d'injection (35).

7. Robinet de frein du mécanicien selon la revendication 2 ou 3, caractérisé par le fait qu'à la première et/ou à la seconde soupape double (14, 31, 34; 18, 20, 21; 47, 48, 51) appartient respectivement un poussoir de soupape creux (13, 14; 41) dont l'espace intérieur (22) est chargé, sans étranglement, par la pression de pré-commande.

8. Robinet de frein du mécanicien selon une ou plusieurs des revendications précédentes, caractérisé par le fait qu'il est prévu un dispositif électrique de commutation (38), commandé indirectement ou directement par l'élément de piston (12) en vue de commander un affichage de serrage et/ou de desserrage du frein.

9. Robinet de frein du mécanicien selon la revendication 8, caractérisé par le fait que le dispositif électrique de commutation (38) est susceptible d'être commandé par un poussoir (37) qui est relié à un plateau de soupape double (31), associé à la première soupape double (14, 31, 34).

10. Robinet de frein du mécanicien selon une ou plusieurs des revendications précédentes, avec un réservoir d'air (9) augmentant le volume des chambres chargées par l'air de pré-commande, et éventuellement relié à la liaison de commande (7, 8), caractérisé par le fait que ledit réservoir d'air (9) est relié à une chambre chargée par la pression de pré-commande et située en aval du dispositif d'étranglement (27; 46), ou à une section (8) de la liaison de commande (7, 8).

11. Robinet de frein du mécanicien selon les revendications 2 et 3, caractérisé par le fait que les deux soupapes doubles sont disposées sur un côté de l'élément de piston, aux deux soupapes doubles étant associés des poussoirs de soupape distincts, dont les cavités intérieures sont chargées par la pression de pré-commande, alors qu'un poussoir de soupape est susceptible d'être déplacé directement par l'élément de piston, et l'autre étant mécaniquement séparé de l'élément de piston et est suivi, au niveau d'un perçage d'un plateau de soupape double de la soupape voisine de l'élément de soupape.

Fig. 1

Fig 2